# EUROPÄISCHE PATENTSCHRIFT

(11) **EP 2 764 904 B1**
(45) Veröffentlichungstag und Bekanntmachung des Hinweises auf die Patenterteilung: **07.03.2018**
(21) Anmeldenummer: 14151475.2
(22) Anmeldetag: 16.01.2014
(51) Int. Cl.: B01D 46/24

(54) **Filterelement**
Filter element
Élément de filtre

(30) Priorität: 12.02.2013 DE 102013002276
(43) Veröffentlichungstag der Anmeldung: 13.08.2014
(73) Patentinhaber: MANN+HUMMEL GmbH, 71636 Ludwigsburg (DE)
(72) Erfinder: Kaufmann, Michael, 67149 Meckenheim (DE); Ruhland, Klaus-Dieter, 67149 Meckenheim (DE); Kupfer, Friedrich, 84163 Poxau (DE); Krieger, Joachim-Paul, 94419 Reisbach (DE); Moosmüller, Anita, 84140 Ganghofen (DE)

(56) Entgegenhaltungen:
- WO-A1-2009/146962
- DE-A1-102006 036 643
- DE-A1-102011 106 502
- US-A1- 2006 254 229

## Beschreibung

### Technisches Gebiet

Die Erfindung betrifft ein Filterelement, insbesondere zur Verwendung als Luftfilter einer Brennkraftmaschine, sowie ein Filtersystem zum Einbau eines solchen Filterelements,

### Stand der Technik

Aus der DE 10 2006 036 643 A1 ist ein Filterelement mit transparenten Endscheiben mitsamt Herstellungsverfahren bekannt. Aus der WO 2009/047196 A1 ist Filtersystem mit einem Filterelement bekannt, bei dem durch die Ausgestaltung der Dichtungen des Filterelements mit zwei ringwulstförmigen Anordnungen und einer dazwischen liegenden Dichtungsnut gewährleistet ist, dass einerseits eine Abdichtwirkung und andererseits eine axiale Abstützung des Filterelements in einem Gehäuse erzielt wird. Gerade bei der Verwendung von Kunststoff für die Abdichtung an schwingungsbelasteten Elementen ist eine Gestaltung erforderlich, die auch bei extremen Temperaturschwankungen zuverlässig arbeitet.

Üblicherweise werden die Filterelemente von Luftfiltern nach einer bestimmten Betriebszeit ausgetauscht. Je nach Staubanfall kann die Standzeit eines Luftfilters wenige Tage (Baumaschinen) bis zu mehreren Monaten betragen.

Insbesondere bei einem häufigen Austausch von Filterelementen ist die zuverlässige und prozesssichere Abdichtung des Filterelements in einem Gehäuse wichtig. Die Abdichtung soll temperaturbeständig und rütteltest ausgeführt sein. Auch an Anlagen oder Einrichtungen, die starken Schwingungen oder Erschütterungen ausgesetzt sind, muss die Abdichtung des Filterelements gewährleistet sein. Gleichzeitig soll aber das Filterelement selbst möglichst keine metallischen Elemente aufweisen, damit es problemlos thermisch entsorgt werden kann.

Eine Aufgabe der Erfindung ist es, ein Filterelement mit einer zuverlässigen Abdichtung zwischen dem Bereich des ungefilterten und dem Bereich des gefilterten Mediums zu schaffen, das insbesondere bei häufigem Austausch des Filterelements eine sichere Montierbarkeit gewährleistet

Eine weitere Aufgabe der Erfindung ist es, ein Filtersystem zur Aufnahme eines solchen austauschbaren Filterelements mit einer zuverlässigen Abdichtung und sicheren Montierbarkeit zu schaffen.

Die vorgenannten Aufgaben werden nach einem Aspekt der Erfindung gelöst bei einem Filterelement, bei dem wenigstens eine der Endscheiben mit einem Verstärkungsring versteift ist, welcher von außen sichtbare Öffnungen zur Füllstandskontrolle eines Füllstands einer Masse zur Verbindung der Endscheibe mit einer Stirnseite des Filterkörpers aufweist, und nach einem weiteren Aspekt der Erfindung gelöst von einem Filtersystem mit einem derartigen Filterelement.

Günstige Ausgestaltungen und Vorteile der Erfindung ergeben sich aus den weiteren Ansprüchen, der Beschreibung und der Zeichnung.

### Offenbarung der Erfindung

Es wird ein Filterelement vorgeschlagen, das einen zickzackförmig gefalteten, ringförmig geschlossenen Filterkörper mit einer Längsachse, eine erste an einer Stirnseite angeordnete offene oder geschlossene Endscheibe und eine zweite an der gegenüberliegenden Stirnseite angeordnete Endscheibe sowie ein um die Längsachse zwischen der ersten und der zweiten Endscheibe angeordnetes Stützrohr umfasst. Dabei ist wenigstens eine der Endscheiben aus einer an die Stirnseite des Filterkörpers angeschäumten Schaum- oder Elastomer-Masse gebildet und mit einem eingebetteten Verstärkungsring versteift, welcher von radial außen sichtbare Öffnungen zur Füllstandskontrolle eines Füllstands der Masse aufweist.

Die Fertigung eines Filterelements der beschriebenen Art sieht üblicherweise eine Herstellung der Endscheiben aus z.B. einem weichelastischen Schaum als Werkstoff vor. Dabei werden zuerst Filterkörper und ein eingebetteter Verstärkungsring, der mit geschlossenem Rand oder ohne Rand ausgeführt sein kann, integriert und anschließend die Endscheiben an beiden Stirnseiten des Filterkörpers mit einer entsprechenden Schaum- oder Elastomer-Masse angeschäumt. Bei diesem Prozess steigt der Schaum auch in den Filterkörper hoch. Bei einem Verstärkungsring mit einem geschlossenen umlaufenden Rand kann nur durch Aufschneiden des Verstärkungsrings nach der Fertigung der Endscheiben festgestellt werden, wie hoch die Masse bzw. der Schaum in den Filterkörper gestiegen ist, wie hoch er im Außenbereich des Filterkörpers gestiegen und wie fest die Verbindung der Endscheiben mit dem Filterkörper ist.

Durch eine erfindungsgemäße Anordnung ist eine kontinuierliche und zerstörungsfreie Kontrolle des Füllstands der Masse möglich, die als Endscheibenwerkstoff sowie zum Abdichten der Endscheiben gegen den Filterkörper verwendet wird. Diese Kontrolle ist als Stichprobenkontrolle denkbar und erlaubt insbesondere als Online-Kontrolle in der Fertigungsanlage eine Automatisierung in einer Serienproduktion. Dadurch, dass die Schaumhöhe von außen sichtbar ist, kann auf einfache Weise festgestellt werden, ob die Dosiermenge der Masse beim Herstellungsprozess ausreichend war und somit eine abdichtende Wirkung bei der Verbindung der Endscheibe mit der Stirnfläche des Filterkörpers sichergestellt ist.

In einer günstigen Ausführungsform kann der Verstärkungsring Schlitze als Öffnungen aufweisen, durch welche die Füllstandshöhe des Schaums während oder nach dem Herstellungsprozess beobachtbar ist. Damit kann der Herstellungsprozess gesteuert werden oder eine Qualitätskontrolle am Ende der Fertigung erfolgen. Schlitze sind zudem in den Verstärkungsring auf einfache Art einzubringen, ohne dass die Stabilität des Verstärkungsrings zu sehr beeinträchtigt wird,

Vorteilhafterweise kann die Füllstandskontrolle eines Füllstands einer Masse zur Verbindung der Endscheibe mit der Stirnseite des Filterkörpers über das Bestimmen der Steighöhe eines Schaums in den von außen sichtbaren Öffnungen erfolgen. Mit der Steighöhe ist ein einfach zu kontrollierendes Maß für die Eindringtiefe der Masse in den Filterkörper und/oder für die Stärke der Endscheibe gegeben, die wiederum mit einer technischen Vorgabe verglichen werden kann.

Günstigerweise ist über die von außen sichtbaren Öffnungen des Verstärkungsrings eine Füllhöhe der Masse der Endscheibe bestimmbar gemacht, die ohne zerstörende Prüfung, beispielsweise durch Aufschneiden des Verstärkungsrings, durchzuführen ist und damit kostengünstig und/oder sogar online während der Herstellung möglich ist.

Zweckmäßigerweise kann der Verstärkungsring weiter von innen sichtbare Öffnungen zur Füllstandskontrolle eines Füllstands der Masse aufweisen. Damit ist auch über die Innenseite eine präzise Aussage über den Erfolg des Herstellungsprozesses von Endscheibe und Abdichtung zwischen Endscheibe und Filterkörper möglich.

In einer vorteilhaften Ausgestaltung kann der Verstärkungsring gewendelte Stege zur Verzahnung der Masse der Endscheibe mit dem Filterkörper aufweisen. Für den dauerhaften Einsatz eines Filterelements in einem mechanisch stark belasteten System, wie es beispielsweise in Kraftfahrzeugen, vor allem im Bau- und Landmaschinenbereich, der Fall ist, ist die dauerhafte und sicher abgedichtete Verbindung der Endscheiben mit dem Filterkörper von entscheidender Bedeutung. Dies kann über eine möglichst gute Verzahnung der Masse der Endscheibe mit dem Verstärkungsring des Filterkörpers erreicht werden. Dies wiederum wird durch eine Gestaltung der Fläche des Verstärkungsrings mit gewendelten Stegen begünstigt.

Zweckmäßigerweise kann die Masse zur Abdichtung einer Stirnseite des Filterkörpers vorgesehen sein. Damit ist eine sichere Funktion eines Luftfilters ermöglicht, der ohne unerwünschten Bypass und damit eine zusätzliche Schmutzeinbringung in den Reinluftbereich arbeitet.

Vorteilhafterweise kann die erste Endscheibe eine radiale Dichtung gegenüber dem Gehäuse aufweisen. Dies hat den Vorteil, dass neben einer guten Abdichtung und damit einer sicheren Filterwirkung, durch die radiale Dichtung sowie der radialen Verspannung der Abstütznoppen im Deckel eine doppeltradiale Führung des Filterelements im Gehäuse bewirkt werden kann und damit eine sehr stabile Halterung des Filterelements im Gehäuse entsteht.

In einer vorteilhaften Ausgestaltung kann die Masse der wenigstens einen Endscheibe aus einem Polyurethanschaum oder einem Elastomer bestehen. Selbstverständlich besteht auch die Möglichkeit, die Endscheibe aus mehreren Kunststoffkomponenten herzustellen, um so eine optimale Verformbarkeit über einen großen Temperaturbereich, wie er beim Einsatz in der Praxis auftreten kann, zu gewährleisten. So sind auch thermoplastische Kunststoffe nicht ausgeschlossen. Beide Endscheiben können mit dem Filterkörper verklebt ausgeführt sein, um eine stabile Verbindung zu bewirken.

In einer günstigen Ausgestaltung kann der zickzackförmig gefaltete, ringförmig geschlossen ausgeführte Filterkörper aus Papier, aus Papier mit Kunststofffasern verstärkt und/oder aus kunststoffbeschichtetem Papier bestehen. Der Einsatz dieser Werkstoffe als Filtermedium stellt eine sehr wirtschaftliche Möglichkeit dar, ein solches Filterelement zu realisieren. Gleichzeitig bietet die beschriebene Formgestaltung eine stabile Anordnung, sodass eine selbsttragende Bauweise des Filterkörpers und damit eine günstige Montageeigenschaft gegeben ist.

Zweckmäßigerweise kann das Filterelement als Kompaktluftfilter, insbesondere als Luftfilter einer Brennkraftmaschine verwendet werden. Der sichere Betrieb von Brennkraftmaschinen beruht auch auf einer sicheren und günstigen Filterung der Ansaugluft für den Verbrennungsbetrieb. Das beschriebene Filterelement stellt dafür eine wirtschaftliche Möglichkeit dar.

Vorteilhaft ist ebenso die Verwendung des Filterelements als Partikelfilter, insbesondere als Dieselpartikelfilter einer Brennkraftmaschine. Auch hier sind die sichere Montage und wirtschaftliche Austauschbarkeit des beschriebenen Filterelements von entscheidender Bedeutung.

Die Erfindung betrifft nach einem weiteren Aspekt ein Filtersystem mit einem Filterelement nach einem der vorhergehenden Ansprüche, umfassend ein Gehäuse, weiches im Wesentlichen konzentrisch um eine Längsachse aufgebaut ist, einen das Gehäuse verschließenden Deckel, der ebenfalls konzentrisch um die Längsachse aufgebaut ist, einen am Gehäuse und/oder Deckel angeordneten Einlass zum Zuführen des zu filternden Mediums, insbesondere Luft, wobei am Gehäuse konzentrisch zur Längsachse ein Auslass zur Ableitung des gefiltertem Mediums vorgesehen ist, wobei am Gehäuse im Bereich des Auslasses eine Dichtungskontur vorgesehen ist, die mit der radialen Dichtung der ersten Endscheibe des Filterelements korrespondiert, wobei das Filterelement auswechselbar in dem Gehäuse des Filtersystems angeordnet ist. Der wesentliche Vorteil eines solchen Filtersystems liegt dabei in der sicheren und stabilen Montage des Filterelements sowie einer sehr wirtschaftlichen Austauschbarkeit des Filterelements im Servicefall. Gerade bei niedrigen Standzeiten, wie sie im Land- und Baumaschineneinsatz auftreten können, ist die schnelle Austauschbarkeit von großer Bedeutung.

Vorteilhafterweise kann im Bereich des Einlasses des Filtersystems ein Zyklonabscheider vorgesehen sein und am Gehäuse oder am Deckel ein Schmutzauslass vorgesehen sein. Dieser Zyklonabscheider besteht aus einer Leitgeometrie, die das zu filternde Medium in eine Rotation versetzt. Durch diese Rotation wird der Schmutz im Bereich der Gehäusewand aufkonzentriert und an einer geeigneten Stelle über einen Schmutzauslass ausgetragen. Durch die Vorabscheidung des größten Teils an Schmutz aus der zu filternden Luft kann die Standzeit des eigentlichen Filterelements entscheidend verlängert werden.

Gemäß einer weiteren Ausgestaltung der Erfindung kann ein Sekundärelement im Inneren des Filterelements angeordnet sein. Das Sekundärelement, das aus einer tragenden Struktur bestehen kann, die mit einem durchlässigen Filtermedium, beispielsweise einem Vlies, verkleidet ist, hat die Aufgabe, bei einem Austausch des Filterelements den Auslass des Filtersystems weiterhin verschlossen zu halten, so dass kein Schmutz in diesen Bereich eindringen kann, während das Filterelement gereinigt oder erneuert wird. Das Sekundärelement ist in bevorzugter Ausgestaltung über eine Schraubverbindung mit dem Gehäuse verbunden und zum Gehäuse mit einer Dichtung versehen.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine perspektivische Ansicht eines Filtersystems nach einem Ausführungsbeispiel der Erfindung mit tangentialem Einlass, zentrischem Auslass und bodenseitigem Schmutzauslass;
- Fig. 2: eine perspektivische Ansicht eines Filtersystems nach einem Ausführungsbeispiel der Erfindung mit radialem Einlass und zentrischem Auslass;
- Fig. 3: Längsschnitt durch ein Filtersystem nach einem Ausführungsbeispiel der Erfindung mit tangentialem Einlass, zentrischem Auslass und bodenseitigem Schmutzauslass;
- Fig. 4: ein Filterelement nach dem Stand der Technik mit einem geschlossenen Verstärkungsring und integrierten Endscheiben;
- Fig. 5: eine perspektivische Darstellung eines Filterkörpers mit einem geschlossenen Verstärkungsring nach dem Stand der Technik;
- Fig. 6: einen Teillängsschnitt eines Filterelements nach dem Stand der Technik mit einem geschlossenen Verstärkungsring und einer integrierten Endscheibe;
- Fig. 7: ein Filterelement nach einem Ausführungsbeispiel der Erfindung mit einem geschlitzten Verstärkungsring und integrierten Endscheiben;
- Fig. 8: eine perspektivische Darstellung eines Filterkörpers mit einem geschlitzten Verstärkungsring nach einem Ausführungsbeispiel der Erfindung
- Fig. 9: einen Teillängsschnitt eines Filterelements nach einem Ausführungsbeispiel der Erfindung mit einem geschlitzten Verstärkungsring und einer integrierten Endscheibe.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

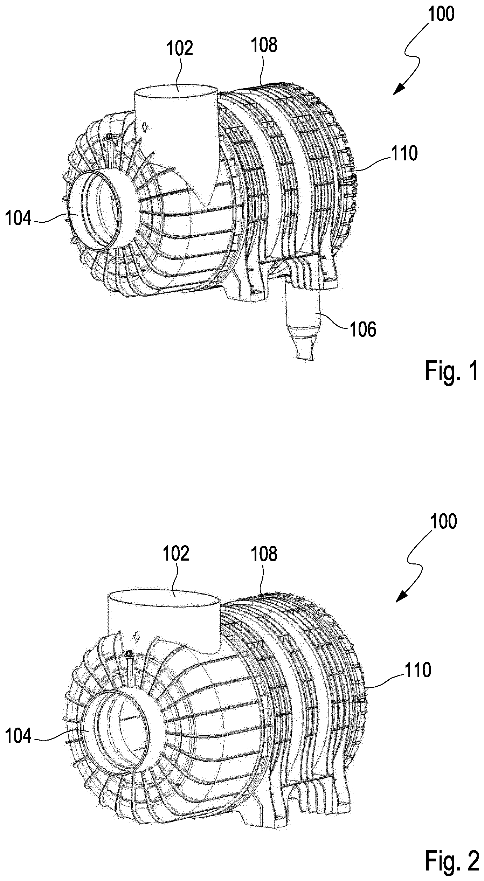

Figur 1 zeigt eine perspektivische Ansicht eines Filtersystems 100 nach einem Ausführungsbeispiel der Erfindung mit tangentialem Einlass 102, zentrischem Auslass 104 an einer Gehäusestirnseite und bodenseitigem Schmutzauslass 106. Dargestellt ist eine Rundfilterbauform, die aus einem Gehäuse 108 besteht, das mit einem Deckel 110, beispielsweise mit Schraub- oder Bajonettverschluss, verschlossen wird.

Bei einer Verwendung als Luftfiltersystem strömt staubbeladene Luft in den Einlass 102, der tangential zum innen eingebauten Luftfilterelement angeordnet ist, sodass die Luft im Innern des Gehäuses 108 durch einen Anströmschutz am Filterelement in eine Rotationsbewegung versetzt wird. Filterelement und Anströmschutz sind in der Zeichnung nicht dargestellt. Durch den über die Rotationsbewegung der Luft bewirkten Zykloneffekt wirken Fliehkräfte auf die Staubpartikel der strömenden Luft, sodass diese sich teilweise an der Gehäusewand abscheiden und über den Schmutzauslass 106 aus dem Filtersystem 100 abströmen können. Dadurch wird das Filterelement weniger belastet, die Standzeit des Filterelements wird erhöht. Die gereinigte Luft kann über den zentrischen Auslass 104 aus dem Gehäuse 108 abgeführt werden.

Figur 2 zeigt eine perspektivische Ansicht eines Filtersystems 100 nach einem Ausführungsbeispiel mit deckelseitigem Einlass 102 und zentrischem Auslass 104. Dargestellt ist ebenfalls eine Rundfilterbauform, die aus einem Gehäuse 108 besteht, das mit einem Deckel 110 verschlossen ist. Der Einlass, über den staubbeladene Luft in das Gehäuse gelangen kann, ist in dem Fall zentral über dem innen angebrachten Filterelement angeordnet. Der Auslass 104, über den die gereinigte Luft abströmen kann, ist ebenfalls wie in Figur 1 zentrisch angeordnet.

Derartige Filtersysteme wie in Figur 1 und 2 dargestellt werden üblicherweise im Baumaschinen und Landmaschinenbereich eingesetzt. Sie zeichnen sich durch große Robustheit aus und weisen wegen der hohen Filterlast kurze Standzeiten auf. Ein Filtersystem 100 mit beladenem Filterelement muss dabei einen Gewichtszuwachs von 10 kg oder mehr tolerieren.

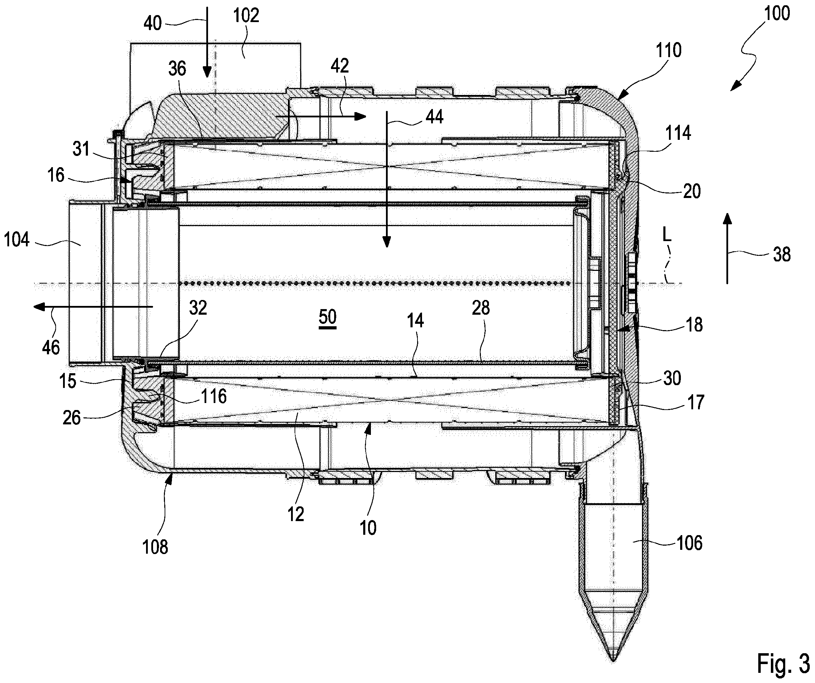

In Figur 3 ist ein Längsschnitt durch ein Filtersystem 100 nach einem Ausführungsbeispiel mit tangentialem Einlass 102, zentrischem Auslass 104 und bodenseitigem Schmutzauslass 106 dargestellt. Das Gehäuse 108 des Filtersystems 100 ist mit einem Deckel 110 verschlossen. Ein Filterelement 10, das aus konzentrisch zu einer Längsachse L angeordnetem Stützrohr 14 und Filterkörper 12 besteht, ist an zwei gegenüberliegenden Stirnseiten 15, 17 mit einer ersten und einer zweiten Endscheibe 16, 18, die beispielsweise aus Polyurethanschaum oder einem Elastomer ausgeführt sein können, abgeschlossen. Zweite Endscheibe 18 und Stützrohr 14 des Filterelements 10 können auch einstückig ausgeführt sein.
Der Filterkörper 12 kann beispielsweise zickzackförmig gefaltet, ringförmig geschlossen ausgeführt sein und beispielsweise aus Papier, aus Papier mit Kunststofffasern verstärkt und/oder aus kunststoffbeschichtetem Papier bestehen.

Die zweite Endscheibe 18, deren Stabilität durch eine Verstärkungsplatte 30 erhöht wird, weist segmentartig unterbrochene Abstütznoppen 20 auf, welche radial nach außen erstreckend kreisförmig um die Längsachse L angeordnet sind und bei einem Einbau in das aufnehmende Gehäuse 108 an einer inneren Deckelkontur 114 des Deckels 110 anliegend sich in radialer Richtung 38 nach außen umlegen und dadurch an dem Gehäuse 108 sowohl axial als auch radial abstützen. An der gegenüberliegenden Stirnseite 15 des Filterelements 10 ist an der ersten Endscheibe 16, deren Stabilität durch einen Verstärkungsring 31 erhöht wird, eine Radialdichtung 26 angebracht, mit deren Hilfe das Filterelement 10 sich über die Dichtungskontur 116 an dem Gehäuse 108 radial abstützt und den ungefilterten gegen den gefilterten Luftraum abdichtet. Das Filterelement 10 ist damit sowohl axial als auch doppelt radial gegen das Gehäuse 108 verspannt.

Staubbeladene Luft kann durch den Einlass 102 in Pfeilrichtung 40 einströmen, der in diesem Fall als tangentialer Einlass dargestellt ist und durch die mit Hilfe eines Zyklonabscheiders 36 bewirkte Rotationsbewegung der Luft einen Zyklonbetrieb ermöglicht. Staubpartikel können durch die Rotationsbewegung teilweise vorabgeschieden sich an der inneren Gehäusewand ablagern und durch den Schmutzauslass 106 bei Einbau des Filtergehäuses 108 in waagrechter Lage nach unten durch die Schwerkraft aus dem Filtersystem 100 entleert werden. Die Luft strömt beim Betrieb nach Teilabscheidung der Staubpartikel durch den Filterkörper 12 in Pfeilrichtung 42, 44 ins Innere 50 des Filterelements, Staubpartikel bleiben dabei je nach Filtermedium ab einer bestimmten Größe im Filtermedium hängen. Je nach Staubeintrag muß deshalb das Filterelement 10 nach einer gewissen Standzeit ausgetauscht werden.

Über den Auslass 104 strömt die gefilterte Luft in Pfeilrichtung 46 ab. Im Inneren 50 des Filterelements 10 ist ein Sekundärelement 28 angebracht, das im Wesentlichen aus einer tragenden Struktur mit einem relativ durchlässigen Filtermedium, beispielsweise einem Vlies, besteht und beim Austausch des Filterelements 10 im Gehäuse 108 zum Schutz der weiteren Luftführung, beispielsweise einer Brennkraftmaschine, gegen eindringende Staubpartikel und andere Gegenstände verbleibt. Das Sekundärelement 28 ist mit einem Schraubteil 32 fest am auslassseitigen Teil des Gehäuses 108 eingeschraubt.

Das Filterelement 10 kann als Kompaktluftfilter, insbesondere als Luftfilter einer Brennkraftmaschine, eingesetzt werden. Prinzipiell ist jedoch auch eine Verwendung als Dieselpartikelfilter in ähnlicher Bauform denkbar.

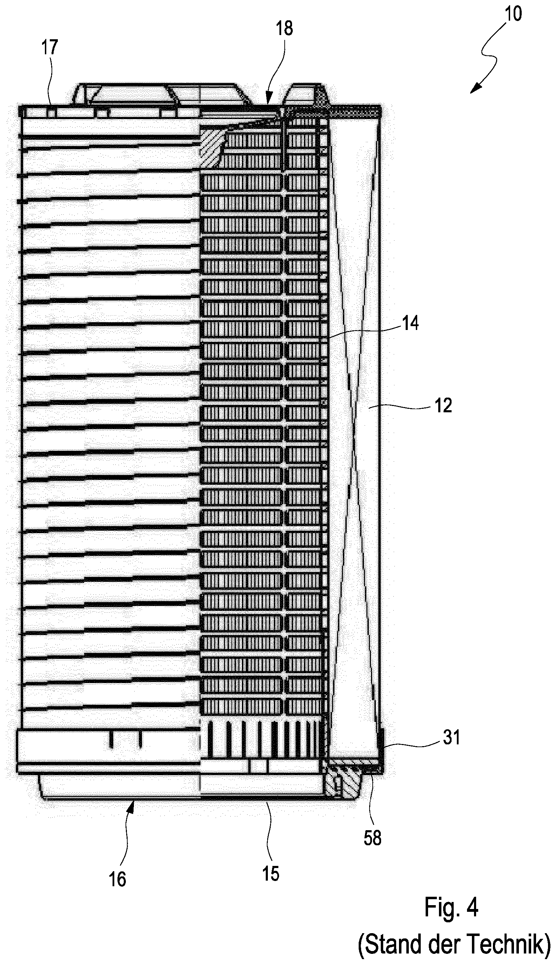

Figur 4 zeigt ein Filterelement 10 nach dem Stand der Technik mit einem geschlossenen Verstärkungsring 31 und integrierten Endscheiben 16, 18. Das Filterelement 10 ist an beiden Stirnseiten 15 und 17 mit den Endscheiben 16 und 18 versehen, die das Filterelement 10 an beiden Stirnseiten 15, 17 abschließen. Die rechte Hälfte des Filterelements 10 ist aufgeschnitten, sodass der Filterkörper 12 sowie das Stützrohr 14 zu erkennen sind. An der Stirnseite 58 des Filterkörpers 12 ist der Verstärkungsring 31 zu erkennen, der mit einem geschlossenen Rand um die äußere Kante des Filterkörpers 12 herumgezogen ist. Die Endscheibe 16 ist an diese Stirnseite 58 des Filterkörpers 12 angeschäumt und dichtet diesen mit dem Verstärkungsring 31 zusammen ab.

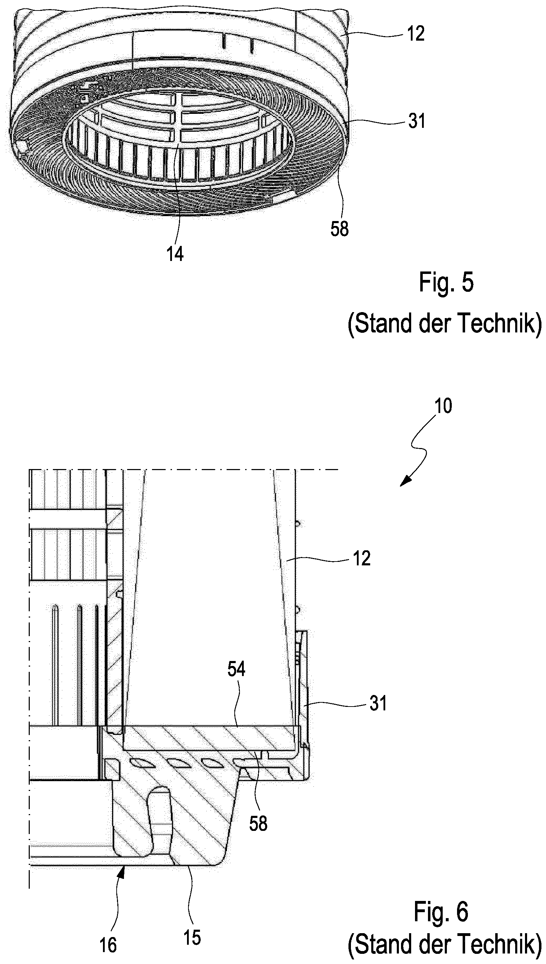

In Figur 5 ist in einer perspektivischen Darstellung ein Filterkörpers 12 mit einem geschlossenen Verstärkungsring 31 nach dem Stand der Technik zu sehen. Der zylinderförmige Filterkörper 12 ist an der Stirnseite 58 mit dem Verstärkungsring 31 abgeschlossen, der einen geschlossenen Rand aufweist. Auf der Innenseite des Filterkörpers 12 ist ein Stützrohr 14 zur Versteifung des Filterkörpers 12 zu erkennen.

Figur 6 zeigt einen Teillängsschnitt eines Filterelements 10 nach dem Stand der Technik mit einem Filterkörper 12 mit geschlossenem Verstärkungsring 31 und einer integrierten Endscheibe 16, wie er in Figur 5 dargestellt ist. Es ist eine an den Filterkörper 12 und den Verstärkungsring 31 angeschäumte Endscheibe 16 zu sehen. Im Inneren des Filterkörpers 12 ist die Füllhöhe 54 der Masse der Endscheibe 16 zu erkennen, die von außen wegen dem geschlossenen hochgezogenen Rand des Verstärkungsrings 31 jedoch nicht zu beobachten ist und damit weder während dem Herstellungsprozess noch danach zu kontrollieren ist. Die Füllhöhe kann lediglich durch Aufschneiden des Verstärkungsrings 31, also über eine zerstörende Kontrolle, festgestellt werden.

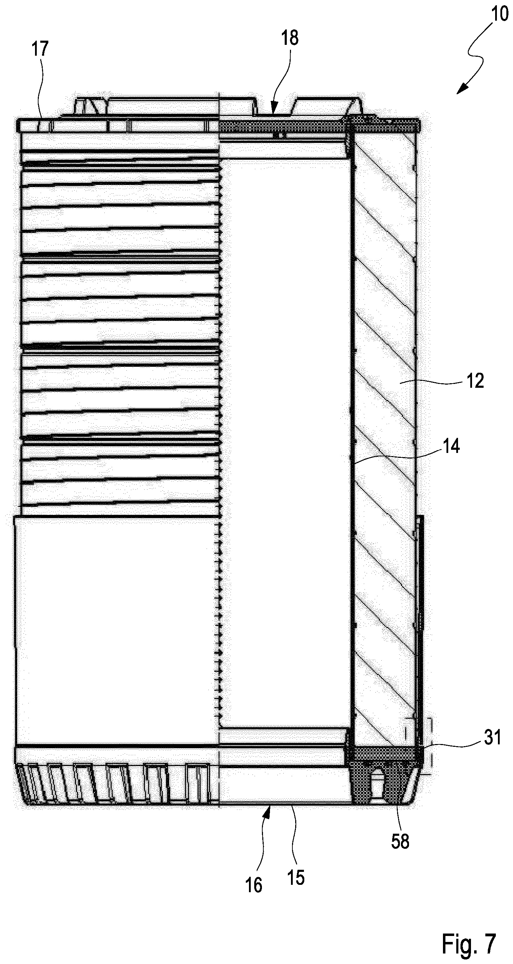

In Figur 7 ist dagegen ein Filterelement 10 nach einem Ausführungsbeispiel der Erfindung mit einem geschlitzten Verstärkungsring 31 und integrierten Endscheiben 16, 18 dargestellt. Das Filterelement 10 ist an beiden Stirnseiten 15 und 17 mit den Endscheiben 16 und 18 versehen, die das Filterelement 10 an beiden Stirnseiten 15, 17 abschließen. Die rechte Hälfte des Filterelements 10 ist aufgeschnitten, sodass der Filterkörper 12 sowie das Stützrohr 14 zu erkennen sind. An der Stirnseite 58 des Filterkörpers 12 ist der Verstärkungsring 31 zu erkennen, der mit einem geschlitzten Rand um die äußere Kante des Filterkörpers 12 herumgezogen ist. Die Endscheibe 16 ist an Stirnseite 58 des Filterkörpers 12 angeschäumt und dichtet diesen mit dem Verstärkungsring 31 zusammen ab.

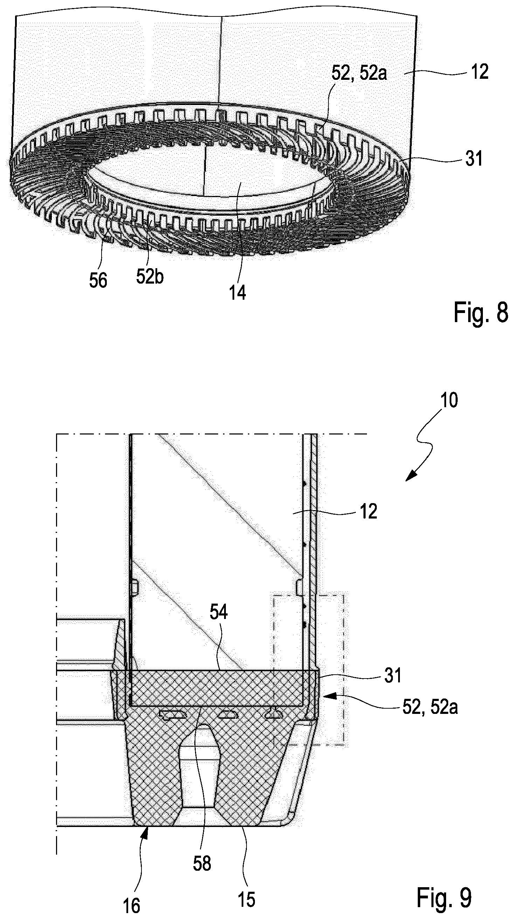

Figur 8 zeigt dazu eine perspektivische Darstellung eines Filterkörpers 12 mit einem geschlitzten Verstärkungsring 31 nach einem Ausführungsbeispiel der Erfindung. Der Verstärkungsring 31 weist als von außen sichtbare Öffnungen 52 Schlitze 52a auf. Durch die gewendelten Stege 56, die über die ganze Tiefe des Verstärkungsrings 31 bis zur Innenseite geführt werden, sind auch von innen sichtbare Öffnungen 52b realisiert. Die Innenseite des Verstärkungsrings 31 schließt dabei an das Stützrohr 14 an. Von innen sichtbare Öffnungen 52b sind jedoch auch durch andere Ausführungen, also nicht nur über gewendelte Stege 56, realisierbar.

Figur 9 zeigt einen Teillängsschnitt eines Filterelements 10 nach einem Ausführungsbeispiel der Erfindung mit einem Filterkörper 12, wie in Figur 8 dargestellt, mit einem geschlitzten Verstärkungsring 31 und einer integrierten Endscheibe 16, welche an die Stirnseite 58 des Filterkörpers 12 angeschäumt ist. Im Schnitt ist eine Darstellung gewählt, bei der ein Schlitz 52a als Öffnung 52 gerade geschnitten ist, sodass an der Außenseite des Filterelements 10 keine Wand des Verstärkungsrings 31 zu erkennen ist. Durch den Schlitz 52a kann von außen direkt die Füllhöhe 54 des Schaums der Endscheibe 16 bestimmt werden. Eine Füllstandskontrolle eines Füllstands einer Masse zur Verbindung der Endscheibe 16 mit der Stirnseite 58 des Filterkörpers 12 über das Bestimmen der Steighöhe eines Schaums in den von außen sichtbaren Öffnungen 52 kann auch online direkt während dem Fertigungsprozess der Endscheibe erfolgen. Ober die innen liegenden Öffnungen 52b kann der Füllstand des Schaums auch auf der Innenseite des Filterkörpers 12 kontrolliert werden. Der Verstärkungsring 31 weist in dem Ausführungsbeispiel gewendelte Stege 56 zur besseren Verzahnung der Masse der Endscheibe 16 mit dem Filterkörper 12 und damit dauerhaften Abdichtung der Stirnseite 58 des Filterkörpers 12 auf.

## Patentansprüche

1. Filterelement (10), umfassend einen zickzackförmig gefalteten, ringförmig geschlossenen Filterkörper (12) mit einer Längsachse (L), eine erste an einer Stirnseite (15) angeordnete offene oder geschlossene Endscheibe (16) und eine zweite an der gegenüberliegenden Stirnseite (17) angeordnete Endscheibe (18), ein um die Längsachse (L) zwischen der ersten und der zweiten Endscheibe (16, 18) angeordnetes Stützrohr (14), wobei wenigstens eine der Endscheiben (16) aus einer an die Stirnseite des Filterkörpers angeschäumten Schaum- oder Elastomer-Masse gebildet und mit einem eingebetteten Verstärkungsring (31) versteift ist, welcher von radial außen sichtbare Öffnungen (52) zur Füllstandskontrolle eines Füllstands der Masse aufweist.

2. Filterelement nach Anspruch 1, wobei der Verstärkungsring (31) Schlitze (52a) als Öffnungen (52) aufweist.

3. Filterelement nach Anspruch 1 oder 2, wobei die Füllstandskontrolle eines Füllstands der Masse über das Bestimmen der Steighöhe der Masse in den von außen sichtbaren Öffnungen (52) erfolgt.

4. Filterelement nach einem der vorhergehenden Ansprüche, wobei die Öffnungen (52) eine Füllhöhe (54) der Masse der Endscheibe (16) bestimmbar machen.

5. Filterelement nach einem der vorhergehenden Ansprüche, wobei der Verstärkungsring (31) von innen sichtbare Öffnungen (52b) zur Füllstandskontrolle eines Füllstands der Masse aufweist.

6. Filterelement nach einem der vorhergehenden Ansprüche, wobei der Verstärkungsring (31) gewendelte Stege (56) zur Verzahnung der Masse der Endscheibe (16) mit dem Filterkörper (12) aufweist.

7. Filterelement nach einem der vorhergehenden Ansprüche, wobei die Masse zur Abdichtung einer Stirnseite (58) des Filterkörpers (12) vorgesehen ist.

8. Filterelement nach einem der vorhergehenden Ansprüche, wobei die erste Endscheibe (16) eine radiale Dichtung (26) gegenüber dem Gehäuse (108) aufweist.

9. Filterelement nach einem der vorhergehenden Ansprüche, wobei die Masse aus einem Polyurethanschaum oder einem Elastomer besteht.

10. Filterelement nach einem der vorhergehenden Ansprüche, wobei der Filterkörper (12) aus Papier, aus Papier mit Kunststofffasern verstärkt und/oder aus kunststoffbeschichtetem Papier besteht.

11. Verwendung eines Filterelements (10) nach einem der vorhergehenden Ansprüche, als Kompaktluftfilter, insbesondere als Luftfilter einer Brennkraftmaschine.

12. Filtersystem (100) mit einem Filterelement (10) nach einem der vorhergehenden Ansprüche, umfassend
- ein Gehäuse (108), welches im Wesentlichen konzentrisch um eine Längsachse (L) aufgebaut ist,
- einen das Gehäuse (108) verschließenden Deckel (110), der ebenfalls konzentrisch um die Längsachse (L) aufgebaut ist,
- einen am Gehäuse (108) und/oder Deckel (110) angeordneten Einlass (102) zum Zuführen des zu filternden Mediums, insbesondere Luft,
wobei am Gehäuse (108) konzentrisch zur Längsachse (L) ein Auslass (104) zur Ableitung des gefiltertem Mediums vorgesehen ist, wobei am Gehäuse (108) im Bereich des Auslasses (104) eine Dichtungskontur (116) vorgesehen ist, die mit der radialen Dichtung (26) der ersten Endscheibe (16) des Filterelements (10) korrespondiert, wobei das Filterelement (10) auswechselbar in dem Gehäuse (108) des Filtersystems (100) angeordnet ist.

13. Filtersystem (100) nach Anspruch 12, wobei im Bereich des Einlasses (102) ein Zyklonabscheider (36) vorgesehen ist und am Gehäuse (108) oder am Deckel (110) ein Schmutzauslass (106) vorgesehen ist.

14. Filtersystem (100) nach Anspruch 12 oder 13, wobei ein Sekundärelement (28) im Inneren (50) des Filterelements (10) angeordnet ist.

15. Filtersystem (100) nach Anspruch 14, wobei das Sekundärelement (28), mit dem Gehäuse (108) verbunden, beim Wechsel des Filterelements (10) im Gehäuse (108) verbleibt.

## Claims

1. Filter element (10), comprising a zigzag-folded, annularly closed filter body (12) having a longitudinal axis (L), a first open or closed end plate (16) disposed on a front side (15) and a second end plate (18) disposed on the opposite front side (17), a support tube (14) disposed around the longitudinal axis (L) between the first and the second end plate (16, 18), wherein at least one of the end disks (16) is made of a foam or elastomer mass foamed to the front side of the filter body and reinforced with an embedded reinforcing ring (31) which features openings (52) radially visible from outside for the level monitoring of a level of the mass.

2. Filter element according to claim 1, wherein the reinforcing ring (31) features slits (52a) as openings (52).

3. Filter element according to claim 1 or 2, wherein the level monitoring of a level of the mass is done by determining the rising height of the mass in the openings (52) visible from the outside.

4. Filter element according to one of the above claims, wherein the openings (52) allow to determine a fill level (54) of the mass of the end disk (16).

5. Filter element according to one of the above claims, wherein the reinforcing ring (31) features openings (52b) visible from the inside for the level monitoring of a level of the mass.

6. Filter element according to one of the above claims, wherein the reinforcing ring (31) features helical ribs (56) for interlocking the mass of the end disk (16) with the filter body (12).

7. Filter element according to one of the above claims, wherein the mass is provided for sealing a front side (58) of the filter body (12).

8. Filter element according to one of the above claims, wherein the first end disk (16) features a radial seal (26) relative to the housing (108).

9. Filter element according to one of the above claims, wherein the mass is made of polyurethane foam or an elastomer.

10. Filter element according to one of the above claims, wherein the filter body (12) is made of paper, of paper reinforced with synthetic fibers and/or of plastic-coated paper.

11. Use of a filter element (10) according to one of the above claims as compact air filter, in particular as air filter of an internal combustion engine.

12. Filter system (100) having a filter element (10) according to one of the above claims, comprising
- a housing (108) which is substantially designed concentrically around a longitudinal axis (L),
- a cover (110) closing the housing (108) which is also designed concentrically around the longitudinal axis (L),
- an inlet (102) disposed at the housing (108) and/or at the cover (110) for supplying the medium to be filtered, in particular air,
wherein an outlet (104) for discharging the filtered medium is provided at the housing (108) concentrically with regard to the longitudinal axis (L), wherein a sealing contour (116), which corresponds with the radial sealing (26) of the first end disk (16) of the filter element (10), is provided at the housing (108) in the area of the outlet (104), wherein the filter element (10) is disposed replaceably in the housing (108) of the filter system (100).

13. Filter system (100) according to claim 12, wherein a cyclone separator (36) is provided in the area of the inlet (102) and a dirt outlet (106) is provided at the housing (108) or at the cover (110).

14. Filter system (100) according to claim 12 or 13, wherein a secondary element (28) is disposed in the inside (50) of the filter element (10).

15. Filter system (100) according to claim 14, wherein the secondary element (28), connected to the housing (108), remains in the housing (108) when the filter element (10) is replaced.

## Revendications

1. Élément filtrant (10), comprenant un corps de filtre (12) fermé de manière annulaire, plié en zigzag, avec un axe longitudinal (L), un premier disque d'extrémité (16) ouvert ou fermé disposé sur une face frontale (15) et un deuxième disque d'extrémité (18) disposé sur la face frontale opposée (17), un tube de support (14) placé autour de l'axe longitudinal (L) entre le premier et le deuxième disques d'extrémité (16, 18), au moins l'un des deux disques d'extrémité (16) étant constitué d'une masse en mousse ou élastomère moussée sur la face frontale du corps de filtre et étant renforcé par une bague de renfort (31) incorporée qui comporte des ouvertures (52) visibles depuis le côté radialement extérieur et sont destinées à contrôler un niveau de la masse.

2. Élément filtrant selon la revendication 1, la bague de renfort (31) comportant des fentes (52a) en tant qu'ouvertures (52).

3. Élément filtrant selon la revendication 1 ou 2, le contrôle de niveau d'un niveau de la masse s'opérant par détermination de la hauteur de montée de la masse dans les ouvertures (52) visibles de l'extérieur.

4. Élément filtrant selon l'une des revendications précédentes, les ouvertures (52) permettant de déterminer une hauteur de remplissage (54) de la masse du disque d'extrémité (16).

5. Élément filtrant selon l'une des revendications précédentes, la bague de renfort (31) présentant des ouvertures (52b) visibles de l'intérieur destinées à contrôler un niveau de la masse.

6. Élément filtrant selon l'une des revendications précédentes, la bague de renfort (31) présentant des nervures hélicoïdales (56) servant à engrener la masse du disque d'extrémité (16) avec le corps de filtre (12).

7. Élément filtrant selon l'une des revendications précédentes, la masse étant prévue pour étancher une face frontale (58) du corps de filtre (12).

8. Élément filtrant selon l'une des revendications précédentes, le premier disque d'extrémité (16) présentant un joint d'étanchéité radial (26) par rapport au boîtier (108).

9. Élément filtrant selon l'une des revendications précédentes, la masse étant réalisée en mousse polyuréthane ou en élastomère.

10. Élément filtrant selon l'une des revendications précédentes, le corps de filtre (12) étant composé de papier, de papier renforcé de fibres synthétiques et/ou de papier revêtu de matière synthétique.

11. Utilisation d'un élément filtrant (10) selon l'une des revendications précédentes, en tant que filtre à air compact, notamment en tant que filtre à air d'un moteur à combustion interne.

12. Système de filtre (100) avec un élément filtrant (10) selon l'une des revendications précédentes, comprenant
- un boîtier (108) qui est conçu de façon essentiellement concentrique autour d'un axe longitudinal (L),
- un couvercle (110) obturant le boîtier (108) et également conçu de manière concentrique autour de l'axe longitudinal (L),
- une entrée (102) placée sur le boîtier (108) et/ou sur le couvercle (110) pour faire entrer le milieu à filtrer, notamment l'air,
une sortie (104) destinée à évacuer le milieu filtré étant disposée de façon concentrique par rapport à l'axe longitudinal (L) sur le boîtier (108), un contour d'étanchéité (116) correspondant avec le joint d'étanchéité radial (26) du premier disque d'extrémité (16) de l'élément filtrant (10) étant prévu sur le boîtier (108) dans la zone de la sortie (104), l'élément filtrant (10) étant disposé de manière échangeable dans le boîtier (108) du système de filtre (100).

13. Système de filtre (100) selon la revendication 12, un séparateur à cyclone (36) étant prévu dans la zone de l'entrée (102) et un orifice d'évacuation des saletés (106) étant prévu sur le boîtier (108) ou sur le couvercle (110).

14. Système de filtre (100) selon la revendication 12 ou 13, un élément secondaire (28) étant disposé à l'intérieur (50) de l'élément filtrant (10).

15. Système de filtre (100) selon la revendication 14, l'élément secondaire (28), une fois relié au boîtier (108), restant dans le boîtier (108) lors de l'échange de l'élément filtrant (10).
